# EUROPEAN PATENT APPLICATION

(11) **EP 2 887 425 A1**
(43) Date of publication of application: **24.06.2015**
(21) Application number: 14198193.6
(22) Date of filing: 16.12.2014
(51) Int. Cl.: H01M 2/10, H01M 2/20

(54) **Battery module**

(30) Priority: 17.12.2013 KR 20130156833
(71) Applicant: Samsung SDI Co., Ltd., Yongin-si, Gyeonggi-do (KR)
(72) Inventor: Shin, Jeong-Min, Yongin-si, Gyeonggi-do (KR); Woo, Seok-Gyun, Yongin-si, Gyeonggi-do (KR); Kwon, Tae-Ho, Yongin-si, Gyeonggi-do (KR)
(74) Representative: Gulde & Partner

(57) **Abstract**

A battery module including a plurality of battery cells each including a terminal portion on one surface thereof, and each having a resistance, the plurality of battery cells being aligned in one direction, and the plurality of battery cells including a battery cell having a first resistance and a battery cell having a second resistance, the second resistance being different from the first resistance, and a busbar that connects terminal portions of the plurality of battery cells. The busbar includes a first busbar and a second busbar, the second busbar having a material or a thickness different from a material of the first busbar. The first busbar is connected to the terminal portion of the battery cell having the first resistance, and the second busbar is connected to the terminal portion of the battery cell having the second resistance.

## Description

### BACKGROUND

### 1. Field

Embodiments relate to a battery module.

### 2. Description of the Related Art

As industries such as electronics, communications, and the like have rapidly developed, the spread of portable electronic devices such as camcorders, cellular phones and notebook PCs has recently increased. Accordingly, the use of secondary batteries has also increased.

Secondary batteries may be used not only for portable electronic devices but also for medium- and large-sized apparatuses such as electric tools, automobiles, space transportation devices, motorbikes, motor scooters, and aerial transportation devices, which require high output and high power. The secondary batteries for the medium- and large-sized apparatuses may be used in the form of large-capacity battery modules or battery packs by connecting a plurality of battery cells in series or in parallel.

### SUMMARY

Embodiments are directed to a battery module including a plurality of battery cells each including a terminal portion, the plurality of battery cells being aligned in one direction, and the plurality of battery cells including a battery cell having a first resistance and a battery cell having a second resistance, the second resistance being different from the first resistance, and a busbar that connects terminal portions of the plurality of battery cells. The busbar includes a first busbar and a second busbar, the second busbar having a material or a thickness different from the first busbar. The first busbar is connected to the terminal portion of the battery cell having the first resistance, and the second busbar is connected to the terminal portion of the battery cell having the second resistance. The material of the busbar may include at least one of gold, silver, iron, aluminum, and copper.

A resistance of the material of the busbar may be selected to be in inverse proportion to the resistance of a respective one of the battery cells.

The busbar may be formed of copper. The busbar may be coated with at least one of gold, silver, iron, and aluminum according to the resistance of a respective one of the battery cells.

The thickness of the busbar may be increased in proportion to the resistance of a respective one of the battery cells.

The busbar may include holes, each hole being at a position corresponding to each terminal portion of the plurality of battery cells.

Each hole may correspond to a shape of each terminal portion.

The battery module may further include a pair of end plates opposite to wide surfaces of the battery cells, a side plate that supports a side surface of each of the battery cells, the side plate connecting the pair of end plates to each other, and a bottom plate that supports a bottom surface of each of the battery cells.

The pair of end plates, the side plate, and the bottom plate may be connected by fastening members.

### BRIEF DESCRIPTION OF THE DRAWINGS

Features will become apparent to those of skill in the art by describing in detail exemplary embodiments with reference to the attached drawings in which:
FIG. 1 illustrates a perspective view of a battery module according to an embodiment.
FIG. 2 illustrates an exploded perspective view of the battery module of FIG. 1.
FIG. 3 illustrates a partial perspective view of the battery module according to the embodiment.
FIG. 4 illustrates a partial perspective view of a battery module according to another embodiment.
FIG. 5 illustrates a partial perspective view of a battery module according to still another embodiment.
FIG. 6 illustrates a partial perspective view of a battery module according to still another embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. Like reference numerals refer to like elements throughout.

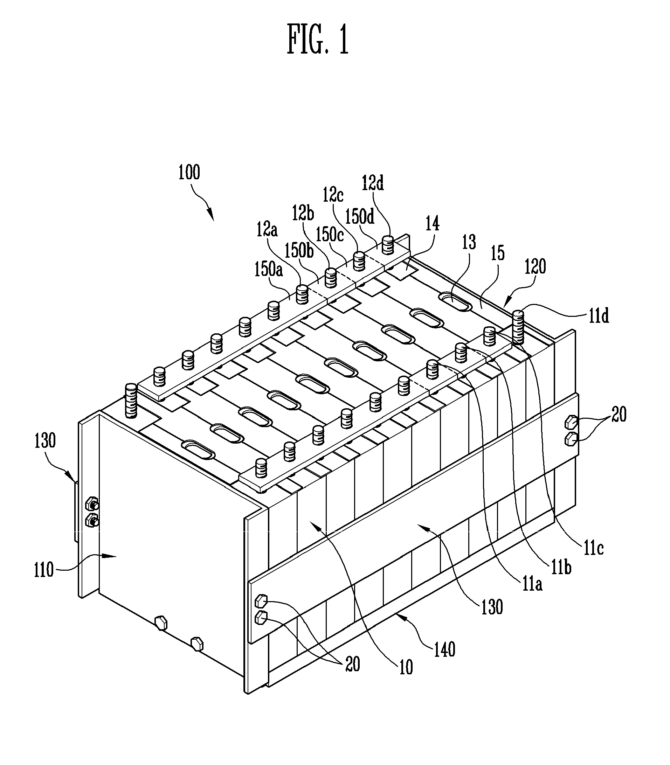

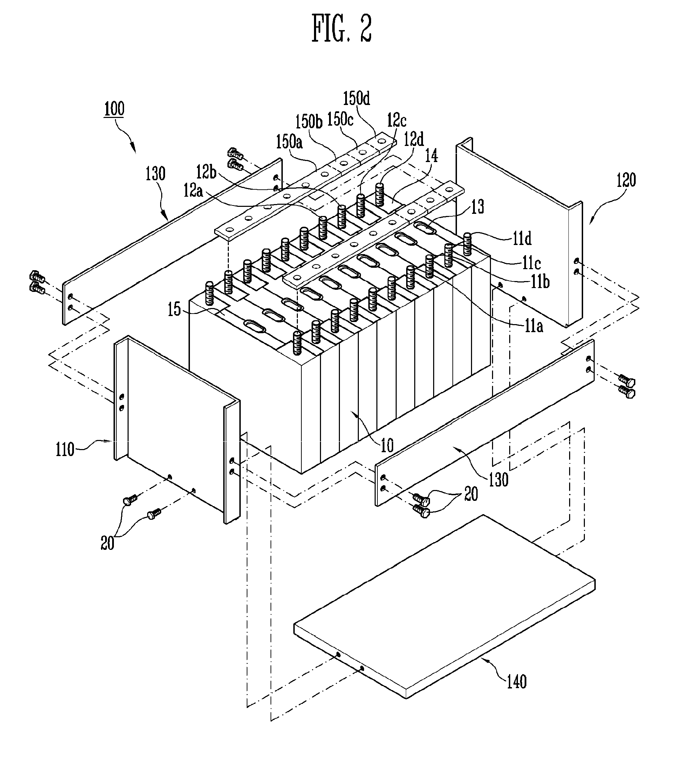

FIG. 1 is a perspective view of a battery module according to an embodiment. FIG. 2 is an exploded perspective view of the battery module of FIG. 1.

As shown in FIGS. 1 and 2, the battery module 100 according to this embodiment includes a plurality of battery cells 10 configured to have terminal portions 11a, 11b, 11c, 11d, 12a, 12b, 12c, and 12d on one surface thereof, the plurality of battery cells 10 being aligned in one direction, a busbar 150 configured to electrically connect the terminal portions 11a, 11b, 11c, 11d, 12a, 12b, 12c, and 12d of the plurality of battery cells 10; and a housing 110, 120, 130, and 140 configured to accommodate the plurality of battery cells 10 therein. The battery cells may each have a first resistance or a second resistance, the second resistance different from the first resistance. For example, at least some of the battery cells may have the first resistance, and at least some of the battery cells may have the second resistance. Herein, the term "resistance" refers to electrical resistance. The busbar 150 includes a first busbar and a second busbar, the second busbar having a material or thickness different from that of the first busbar.

The battery cell 10 may include a battery case configured to include the one surface, and an electrode assembly and an electrolyte, which are accommodated in the battery case. The electrode assembly and the electrolyte generate energy through an electrochemical reaction therebetween. The one surface may be provided with the terminal portions 11a, 11b, 11c, or 11d and 12a, 12b, 12c, or 12d electrically connected to the electrode assembly, and a vent 13 that is an exhaust passage of gas generated inside the battery cell 10. Terminal portions 11a, 11b, 11c, and 11d, and terminal portions 12a, 12b, 12c, and 12d may have different polarities from each other. For example, of the terminal portions 11a, 11b, 11c, 11d, 12a, 12b, 12c, and 12d, terminal portions 11a, 11b, 11c, and 11d may be positive electrodes and terminal portions 12a, 12b, 12c, and 12d may be negative electrodes. The terminal portions of battery cells 10 adjacent to each other may be electrically connected in series or parallel by the busbar 150. A gasket 15 made of an electrically insulating material may be provided on the one surface of the battery cell 10. The terminal portions 11a, 11b, 11c, 11d, 12a, 12b, 12c, and 12d may protrude to an outside of the gaskets 15, and may be connected by the busbar 150 on the gaskets 150. The plurality of battery cells 10 may be aligned in one direction such that wide surfaces of the battery cells 10 are opposite to each other. The plurality of aligned battery cells 10 may be fixed by a housing. The housing may include a pair of end plates 110 and 120 opposite to the wide surfaces of the battery cells 10, side plates 130, and a bottom plate 140, which connect the pair of end plates 110 and 120. The side plates 130 may support side surfaces of the battery cell 10, and the bottom plate 140 may support a bottom surface of the battery cell 10. The pair of end plates 110 and 120, the side plates 130 and the bottom plate 140 may be connected by bolts 20.

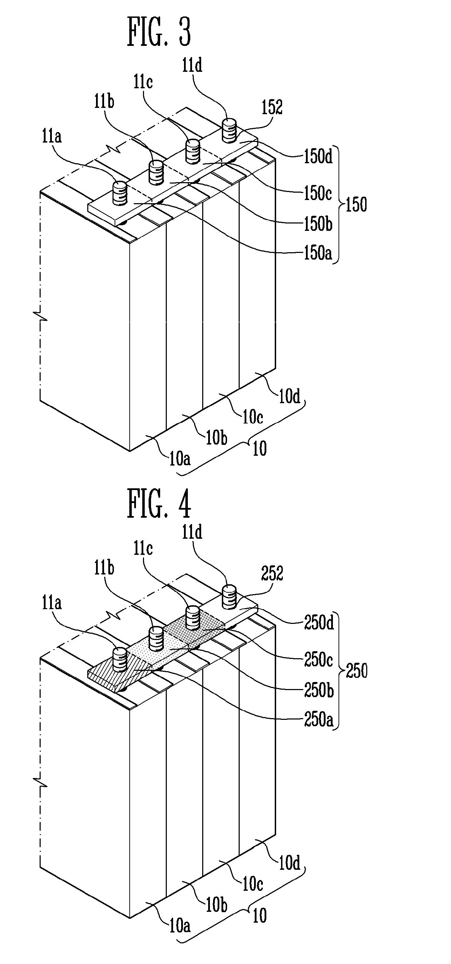

FIG. 3 is a partial perspective view of the battery module according to the embodiment. As shown in FIG. 3, holes 152 corresponding to the shape of the terminal portions 11a, 11b, 11c, 11d, 12a, 12b, 12c, and 12d may be formed at respective sides of the busbar 150 according to this embodiment such that the terminal portions 11a, 11b, 11c, 11d, 12a, 12b, 12c, and 12d may be respectively inserted thereinto. In this case, the terminal portions 11a, 11b, 11c, and 11d of first to fourth battery cells 10a, 10b, 10c, and 10d may be respectively inserted into the holes 152 to be electrically connected by the busbar 150. The busbar 150 may connects the terminal portions 11a, 11b, 11c, and 11d of the first to fourth battery cells 10a, 10b, 10c, and 10d, some of which may a first resistance and some of which may have a second resistance different from the first resistance. In this case, the busbar 150 may be formed with a first busbar 150a and second busbars 150b, 150c, and 150d having a material or thickness different from that of the first busbar 150a. Therefore, the first busbar 150a may be connected to the terminal portion of the battery cell having the first resistance, and the second busbars 150b, 150c, and 150d may be connected to the terminal portions of the battery cells having the second resistance. Although the parallel structure of the terminal portions has been illustrated in FIG. 3, in other implementations, the terminal portions may be arranged to provide a serial structure.

The terminal portions 11a, 11b, 11c, 11d, 12a, 12b, 12c, and 12d may be made of aluminum, copper or the like. The busbar 150 may be made of copper. The first to fourth battery cells 10a, 10b, 10c, and 10d according to this embodiment may have different resistances and characteristics. The busbar 150 may be provided to have a configuration obtained in accordance with the characteristic of each battery cell 10. FIG. 4 is a partial perspective view of a battery module according to another embodiment.

As shown in FIG. 4, in the battery module according to this embodiment, a busbar 250 may be formed of different materials according to resistances of battery cells 10. When one of adjacent battery cells 10 is a first battery cell 10a and the other three battery cells are second to fourth battery cells 10b, 10c, and 10d, the first to fourth battery cells 10a, 10b, 10c, and 10d may have different resistances. As an example, the first to fourth battery cells 10a, 10b, 10c, and 10d may have resistances of 0.3MΩ, 0.5 MΩ 0.4 MΩ, and 0.2 MΩ, respectively. First and second busbars 250a, 250b, 250c, and 250d may be connected to terminal portions 11a, 11b, 11c, and 11d provided to the first to fourth battery cells 10a, 10b, 10c, and 10d, respectively. The first and second busbars 250a, 250b, 250c, and 250d may be integrally formed or may be separately formed, to be connected through welding or bolting.

The busbar 250 may be made of at least one of gold, silver, iron, aluminum, and copper. When the resistance of the battery cell 10 connected to the busbar 250 is large, a material having a small resistance may be applied to the busbar 250. For example, the busbar 250a applied to the first battery cell 10a may include, the busbar 250b applied to the second battery cell 10b may include silver, the busbar 250c applied to the third battery cell 10c may include copper, and the busbar 250d applied to the fourth battery cell 10d may include aluminum.

For example, the busbar 250 may be made of copper. The busbar 250 may be coated with at least one of gold, silver, iron, aluminum, and copper according to the resistance of the battery cell 10 to which the busbar 250 is connected.

As described above, the busbars 250 formed of different materials may be applied to the battery cells 10 by considering resistances of the battery cells 10, such that the resistances of the plurality of battery cells 10 accommodated in the battery module 100 can be equally controlled. Accordingly, it may be possible to minimize damage to the battery module 100 that may occur from current applied to the battery module 100 in charging/discharging of the battery cells 10, thereby preventing or minimizing in advance the degradation of the capacity of the battery cell 10 and the lowering of the performance of the battery module 100.

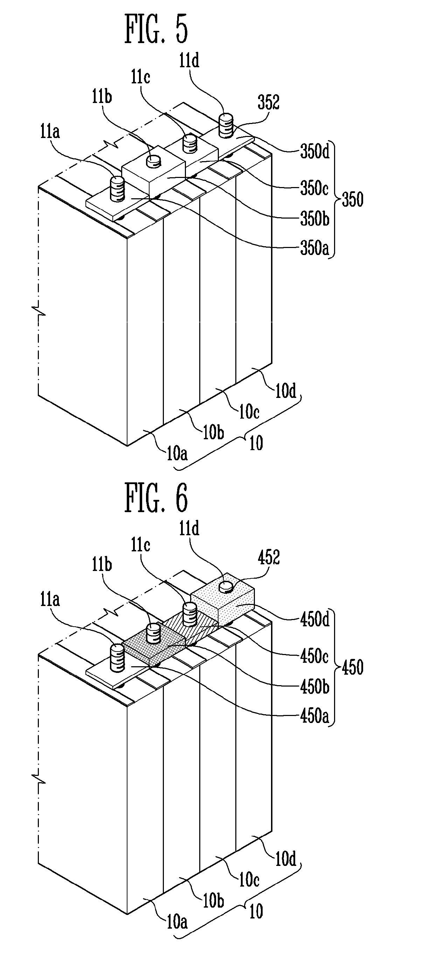

FIG. 5 is a partial perspective view of a battery module according to still another embodiment.

As shown in FIG. 5, in the battery module according to this embodiment, a busbar 350 may be formed of different thicknesses according to resistances of battery cells 10. When one of adjacent battery cells 10 is a first battery cell 10a and the other three battery cells are second to fourth battery cells 10b, 10c, and 10d, the first to fourth battery cells 10a, 10b, 10c, and 10d may have different resistances. As an example, the first to fourth battery cells 10a, 10b, 10c, and 10d may have resistances of 0.3 MΩ, 0.5 MΩ, 0.4 MΩ, and 0.2 MΩ, respectively. First and second busbars 350a, 350b, 350c, and 350d may be connected to terminal portions 11a, 11b, 11c, and 11d provided to the first to fourth battery cells 10a, 10b, 10c, and 10d, respectively. The first and second busbars 350a, 350b, 350c, and 350d may be integrally formed or separately formed, to be connected through welding or bolting.

The terminal portions 11a, 11b, 11c, and 11d may be made of aluminum, copper, or the like, and the busbar 350 may be made of copper. The thickness of the busbar 350 may be selected to be in proportion to the resistance of the battery cell 10 connected thereto. For example, when the resistance of the battery cell 10 is large, the busbar 350 may be thick. For example, the busbar 350 may be sequentially thickened in the order of the busbar 350d connected to the fourth battery cell 10d, which has the smallest resistance, the busbar 350a connected to the first battery cell 10a, the busbar 350c connected to the third battery cell 10c, and the busbar 350b connected to the second battery cell 10b.

As described above, the busbars 350 having different thicknesses may be applied to the battery cells 10 by considering the resistances of the battery cells 10, so that the resistances of the plurality of battery cells 10 accommodated in the battery module 100 may be equally controlled. Accordingly, it may be possible to minimize damage to the battery module 100 from current applied to the battery module 100 in charging/discharging of the battery cells 10, thereby preventing or minimizing in advance the degradation of the capacity of the battery cell 10 and the lowering of the performance of the battery module 100.

FIG. 6 is a partial perspective view of a battery module according to still another embodiment.

As shown in FIG. 6, in the battery module according to this embodiment, a busbar 450 may be formed to have different materials and sizes according to resistances of battery cells 10.

When one of adjacent battery cells 10 is a first battery cell 10a and the other three battery cells are second to fourth battery cells 10b, 10c, and 10d, the first to fourth battery cells 10a, 10b, 10c, and 10d may have different resistances. As an example, the first to fourth battery cells 10a, 10b, 10c, and 10d may have resistances of 0.3 MΩ, 0.5 MΩ, 0.4 MΩ, and 0.2 MΩ, respectively. First and second busbars 450a, 450b, 450c, and 450d may be connected to terminal portions 11a, 11b, 11c, and 11d provided to the first to fourth battery cells 10a, 10b, 10c, and 10d, respectively.

The terminal portions 11a, 11b, 11c, and 11d may be made of aluminum, copper, or the like, and the busbar 450 may be made of at least one of gold, silver, iron, aluminum, and copper according to the resistance of the battery cell 10 connected thereto. The thickness of the busbar 450 may be applied in proportion to the resistance of the battery cell 10.

The resistance of the battery cell 10 is controlled by selecting the material and thickness of the busbar 450, so that the resistances of the battery cells 10 may be more exactly equalized. Accordingly, it may be possible to improve the performance of the battery module and to ensure the safety of the battery module.

By way of summation and review, battery cells in a battery module may be connected in series or parallel. In a battery module, it is desirable that any damage to the battery cells from current applied, for example, during charging, be about equal so that the lifespans of the batteries will be equalized. However, the battery cells of a battery module may be differently damaged from applied current due to different resistances thereof. Therefore, the lifespans of the battery cells may also be different from one another.

Embodiments provide for battery cells to be equally damaged from current applied by controlling resistances of the battery cells to be equal to one another. Embodiments provide a battery module which may extend the lifespan of the battery cell by controlling resistances of adjacent battery cells to be equal to one another.

In the battery module according to embodiments, the busbar may be applied by considering the resistance and characteristic of each battery cell, so that it may be possible to improve the quality of the battery module.

Embodiments provide a battery module having structure in which the resistances of adjacent battery cells are equally controlled.

Embodiments also provide a battery module in which busbars having different materials are applied according to the resistances of battery cells.

Embodiments also provide a battery module in which busbars having different thicknesses are applied according to the resistances of battery cells.

Embodiments also provide a battery module in which busbars having different materials and thicknesses are applied according to the resistances of battery cells.

Busbars having different materials may be applied by considering resistances of the battery cells, so that the resistances of the battery cells may be equally controlled. Accordingly, it may be possible to prevent or minimize damage of the battery cells, thereby extending the lifespan of the battery cells.

Further, busbars having different thicknesses may be applied by considering resistances of the battery cells, such that the resistances of the battery cells can be equally controlled. Accordingly, it may be possible to prevent damage of the battery cells, thereby extending the lifespan of the battery cells.

Further, the resistance of the battery cells may be controlled by selection of the material and thickness of the busbar, so that it may be possible to improve efficiency and to improve the performance of the battery module.

It is clear for a person skilled in the art that the disclosed embodiments can also be combined where possible.

## Claims

1. A battery module (100), comprising:
a plurality of battery cells (10) each including a terminal portion (11a, 11b, 11c, 11d, 12a, 12b, 12c, 12d), the plurality of battery cells (10) being aligned in one direction, and the plurality of battery cells (10) including a battery cell having a first resistance and a battery cell having a second resistance, the second resistance being different from the first resistance; and
a busbar (150) that connects terminal portions (11a, 11b, 11c, 11d, 12a, 12b, 12c, 12d) of the plurality of battery cells (10),
wherein the busbar includes a first busbar and a second busbar, the second busbar having a material or a thickness different from the first busbar, and
wherein the first busbar is connected to the terminal portion (11a, 11b, 11c, 11d, 12a, 12b, 12c, 12d) of the battery cell (10) having the first resistance, and the second busbar is connected to the terminal portion of the battery cell (10) having the second resistance.

2. The battery module as claimed in claim 1, wherein the material of the busbar (150) includes at least one of gold, silver, iron, aluminum, and copper.

3. The battery module as claimed in claim 1 or 2, wherein a resistance of the material of the busbar (250) is selected to be in inverse proportion to the resistance of a respective one of the battery cells (10).

4. The battery module as claimed in one of the preceding claims , wherein:
the busbar (250) is formed of copper., and
the busbar is coated with at least one of gold, silver, iron, and aluminum according to the resistance of a respective one of the battery cells (10)..

5. The battery module as claimed in claim1, wherein the thickness of the busbar (350) is increased in proportion to the resistance of a respective one of the battery cells (10).

6. The battery module as claimed in claim 5, wherein the material of the busbar (450) includes at least one of gold, silver, iron, aluminum, and copper.

7. The battery module as claimed in claim 5 or 6, wherein a resistance of the material of the busbar (450) is selected to be in inverse proportion to the resistance of a respective one of the battery cells (10).

8. The battery module as claimed in one of the preceding claims , wherein the busbar (150) includes holes (152), each hole being at a position corresponding to each terminal portion (11a, 11b, 11c, 11d, 12a, 12b, 12c, 12d) of the plurality of battery cells (10).

9. The battery module as claimed in claim 8, wherein each hole (152) corresponds to a shape of each terminal portion (11a, 11b, 11c, 11d, 12a, 12b, 12c, 12d).

10. The battery module as claimed in one of the preceding claims , further comprising:
a pair of end plates (110, 120) opposite to wide surfaces of the battery cells (10);
a side plate (130) that supports a side surface of each of the battery cells (10), the side plate (130) connecting the pair of end plates (110, 120) to each other; and
a bottom plate (140) that supports a bottom surface of each of the battery cells (10).

11. The battery module as claimed in claim 10, wherein the pair of end plates (110, 120), the side plate (130), and the bottom plate (140) are configured to be connected by fastening members.
